Europäisches Patentamt

European Patent Office

Office européen des brevets

(19)

(11) Veröffentlichungsnummer: **0 367 222 B1**

(12) **EUROPÄISCHE PATENTSCHRIFT**

(45) Veröffentlichungstag der Patentschrift: **03.05.95**

(51) Int. Cl.$^6$: **C08G 77/06**, C08G 77/22, C08G 77/48, C08G 77/38

(21) Anmeldenummer: **89120188.1**

(22) Anmeldetag: **31.10.89**

Die Akte enthält technische Angaben, die nach dem Eingang der Anmeldung eingereicht wurden und die nicht in dieser Patentschrift enthalten sind.

(54) **Durch Organooligosilsesquioxane vernetzte Silicone.**

(30) Priorität: **03.11.88 DE 3837397**

(43) Veröffentlichungstag der Anmeldung: **09.05.90 Patentblatt 90/19**

(45) Bekanntmachung des Hinweises auf die Patenterteilung: **03.05.95 Patentblatt 95/18**

(84) Benannte Vertragsstaaten: **DE FR GB IT**

(56) Entgegenhaltungen:
**EP-A- 0 033 517
EP-A- 0 204 963
EP-A- 0 223 987
EP-A- 0 255 303
EP-A- 0 348 705**

**OUESTEL TELESYSTEMS (WPIL), accession no. 82-01050E [01], Derwent PublicationsLtd, London, GB; & JP-A-56 156 290**

**"Chemistry and Technology of Silicones" W.NOLL, Academic Press, 1986 USA, p.276 and p.395-399**

(73) Patentinhaber: **WACKER-CHEMIE GMBH Hanns-Seidel-Platz 4 D-81737 München (DE)**

(72) Erfinder: **Weidner, Richard, Dr. Dipl.-Chem. Lindacher Strasse 69 D-8263 Burghausen (DE)**
Erfinder: **Zeller, Norbert, Dr. Dipl.-Chem. Schweitzerstrasse 5 D-8263 Burghausen (DE)**
Erfinder: **Deubzer, Bernward, Dr. Dipl.-Chem. Virchow-Strasse 14 D-8263 Burghausen (DE)**
Erfinder: **Frey, Volker, Dr. Dipl.-Chem. Jahnweg 5 D-8263 Burghausen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 367 222 B1

**Beschreibung**

Die Erfindung betrifft durch Organooligosilsesquioxane vernetzte Silicone und Verfahren zu deren Herstellung.

Organooligosilsesquioxane sind beispielsweise durch die Arbeiten von M. G. Voronkov et al. (Zhur. Obshchei Khimii 49 (7), Seite 1522 (1979); Dokl. Akad. Nauk. SSSR 281(6), Seite 1374 (1985); ibid. 270(4), Seite 888 (1983)) bekannt.

Die EP-A 223 987 beschreibt die Herstellung von Lösungen von oligomeren Kondensationsprodukten aus 3-Aminopropyltriethoxysilan und deren Umsetzung zu Silsesquioxanpolymeren.

In EP-A 255 303 und EP-A 204 963 sind Organosilsesquioxanoligomeren als Resist-Materialien beschrieben.

Aufgabe der vorliegenden Erfindung war es, durch Organooligosilsesquioxane vernetzte Silicone bereitzustellen.

Die Erfindung betrifft Verbindungen der Formel

$$[RSiO_{3/2}]_z \qquad (I),$$

worin

$z$ die Zahl 6, 8 oder 10 ;

$R$ gleiche oder verschiedene Reste der Formel

$$\text{-O-Si}(R'_2)\text{-Y} \qquad (IV)$$

sind, mit der Maßgabe, daß bis zu $z-1$ der Reste $R$ auch Reste der Formel $\text{-O-SiR}'_3$ sein können, wobei

$Y$ einen Rest der Formeln

$$\text{-CH}_2\text{CH}_2\text{-X} \qquad II)$$

oder

$$\text{-CH(CH}_3)\text{-X} \qquad (III),$$

$X$ jeweils einen einwertigen bzw. einen halben zweiwertigen Rest der Formeln

$$[\text{-}(R'_2SiO)_n\text{-}]_{1/2} \qquad (VI),$$

$$\text{-S-R''} \qquad (VII)$$

oder

$$[\text{-S-R'''-S-}]_{1/2} \qquad (XV);$$

$R'$ gleiche oder verschiedene $C_1$- bis $C_6$-Alkyl-, $C_1$- bis $C_6$-Alkoxy- oder Phenylreste;

$R''$ gleiche oder verschiedene $C_1$- bis $C_{18}$-Alkylreste, welche durch Reste der Formel (VI) substituiert sind;

$R'''$ gleiche oder verschiedene zweibindige $C_1$- bis $C_{18}$-Kohlenwasserstoffreste, vorzugsweise Alkylen- und/oder Phenylenreste und/oder Reste der Formel $\text{-}(R'_2SiO)_n\text{-}$ und

$n$ eine ganze Zahl im Wert von mindestens 1 bedeuten.

Als Reste $R'$ sind Methyl-, Methoxy- und Ethoxyreste bevorzugt.

Beispiele für Reste $R''$ sind die als Beispiele für Alkylreste $R'$ genannten Reste, sowie Heptylreste, wie der n-Heptylrest, Octylreste, wie der n- und der i-Octylrest, Nonyl-, Decyl-, Dodecyl- sowie Octadecylreste. Diese Reste sind insbesondere durch Reste der Formel (VI) substituiert, deren Reste $R'$ Methyl-, Methoxy- und Ethoxyreste sind.

Vorzugsweise bedeuten

$R'$ gleiche oder verschiedene Methyl- oder Methoxy- oder Ethoxygruppen;

$R''$ gleiche oder verschiedene $C_1$- bis $C_{14}$-Alkylreste, welche durch jeweils einen Rest der Formel (VI) substituiert sind;

Ein Beispiel für einen besonders bevorzugten Rest $R$ ist der Rest der folgenden Formel:

2

-O-Si(CH$_3$)$_2$-C$_2$H$_4$-[Si(CH$_3$)$_2$-O-]$_n$-Si(CH$_3$)$_2$-C$_2$H$_4$-Si(CH$_3$)$_2$-O-,
wobei n die oben angegebene Bedeutung hat.

Die erfindungsgemäßen Verbindungen der Formel (I) sind durch mehrere Verfahren zugänglich.

Verfahren (1):

So können Verbindungen der Formel (I)
durch Umsetzung von Verbindungen der Formel

**[E-(R'$_2$SiO)$_y$SiO$_{3/2}$]$_x$[RSiO$_{3/2}$]$_{(8-x)}$     (IX),**

**worin**
**x** eine ganze Zahl im Wert von 1 bis 8 ist und
**y** den Wert 1 hat,
mit Verbindungen der Formel
**GX     (X)**hergestellt werden, wobei die Reste E in Formel (IX) von den Resten G in Formel (X) verschieden sind und die Reste E und G entweder Vinylgruppen oder direkt an Siliciumatome bzw. Schwefelatome gebundene Wasserstoffatome bedeuten.

Falls im oben genannten Verfahren (1)
**X** jeweils einen Rest der Formel (VI) bedeutet (Verfahrensvariante A, nachfolgend kurz als "Verfahren (1A)" bezeichnet) so wird die Umsetzung vorzugsweise in Gegenwart von Platinmetallen und/oder deren Verbindungen durchgeführt wird.

Falls im oben genannten Verfahren (1)
**X** jeweils einen Rest der Formel (VII) oder (XV) bedeutet (Verfahrensvariante B, nachfolgend kurz als "Verfahren (1B)" bezeichnet), so wird die Umsetzung vorzugsweise in Gegenwart von freien Radikalen, insbesondere in Anwesenheit von organischen Peroxiden, Azoverbindungen und/oder unter Bestrahlung mit hochenergetischer elektromagnetischer Strahlung wie UV-Licht durchgeführt.

Verfahren (1A):

Als Platinmetalle und/oder deren Verbindungen sind die Metalle Platin, Palladium, Rhodium und Iridium, deren Legierungen und chemischen Verbindungen sowie deren Gemische bevorzugt. Besonders bevorzugt sind Platin, dessen Verbindungen und Legierungen, in Substanz oder auf Trägern aufgebracht. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. PtCl$_4$, Na$_2$PtCl$_4$*4H$_2$O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H$_2$PtCl$_6$*6H$_2$O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadien-platindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370.

Platinkatalysator wird vorzugsweise in Mengen 0,5 bis 500 Gewichts-ppm (Gewichtsteilen je Million Gewichtsteilen), insbesondere 2 bis 400 Gewichts-ppm, jeweils berechnet als elementares Platin und bezogen auf das Gewicht von Verbindung der Formel (IX), eingesetzt.

Das Verfahren (1A) wird vorzugsweise bei Temperaturen von 20 °C bis 120 °C, insbesondere von 30 °C bis 100 °C durchgeführt. Das Verfahren kann beim Druck der umgebenden Atmosphäre, also etwa 0,1 MPa (abs.), es kann auch bei höheren oder niedrigeren Drücken durchgeführt werden. Bevorzugt sind Drücke von 0,02 bis 0,2 MPa (abs.), insbesondere von 0,08 bis 0,15 MPa (abs.).

Die Tatsache, daß das oben geschilderte Verfahren (1A) überhaupt zu den erfindungsgemäßen Verbindungen führte, mußte überraschen. M.G. Voronkov et al. (Doklady Akademii Nauk SSSR, Band 270, Nr.4, Seiten 888-890 (1983); in englischer Sprache veröffentlicht von der Plenum Publishing Corporation, Seite 185-186 (1983) ) berichteten, es sei nicht möglich, die Vinylgruppen von Octavinyloctasilsesquioxan zu hydrosilylieren.

Verfahren (1B):

Als Quelle für freie Radikale, welche vorzugsweise in der Variante B des erfindungsgemäßen Verfahrens eingesetzt werden, sind Peroxide, insbesondere organische Peroxide bevorzugt. Beispiele für solche organischen Peroxide sind Peroxyketale, z. B. 1,1-Bis(tert.-butylperoxy)-3,3,5-trimethylcyclohexan, 2,2-Bis-(tert.-butylperoxy)butan und ähnliche, Diacylperoxide, wie z. B. Acetylperoxid, Isobutylperoxid, Benzoylperoxid und ähnliche, Dialkylperoxide, wie z. B. Di-tert-butylperoxid, Tert-butyl-cumylperoxid, Dicumylperoxid, 2,5-Dimethyl-2,5-di(tert.-butylperoxy)hexan und ähnliche und Perester, wie z. B. Tert.-butylperoxyisopropylcarbonat und tert.-Butylperbenzoat, sowie Azoverbindungen wie α,α′-Azobisisobutyronitril.

Vorzugsweise werden Peroxide bzw. Azoverbindungen in Mengen von 0,2 Gewichts-% bis 2 Gewichts-%, insbesondere von 0,5 Gewichts-% bis 1,3 Gewichts-%, jeweils bezogen auf das Gewicht von eingesetzter Verbindung der Formel (IX) im erfindungsgemäßen Verfahren verwendet.

Das Verfahren (1B) wird vorzugsweise bei Temperaturen von 0 °C bis 200 °C, insbesondere von 20 °C bis 150 °C durchgeführt. Das Verfahren kann beim Druck der umgebenden Atmosphäre, also etwa 0,1 MPa (abs.), es kann auch bei höheren oder niedrigeren Drücken durchgeführt werden. Bevorzugt sind Drücke von 0,02 bis 0,2 MPa (abs.), insbesondere von 0,08 bis 0,15 MPa (abs.).

Das Verfahren (1) mit seinen Varianten A und B kann in Anwesenheit oder in Abwesenheit von Lösungsmitteln durchgeführt werden. Falls Lösungsmittel verwendet werden, sind Lösungsmittel oder Lösungsmittelgemische mit einem Siedepunkt bzw. Siedebereich von bis zu 120° C bei 0,1 MPa bevorzugt. Beispiele für solche Lösungsmittel sind Wasser; Alkohole, wie Methanol, Ethanol, n-Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon; Schwefelkohlenstoff und Nitrobenzol, oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden . Die Reaktion kann auch in einem Lösungsmittelgemisch mit einer Mischungslücke ausgeführt werden, wobei in jeder der Mischphasen jeweils mindestens ein Reaktionspartner löslich ist.

Für die Variante A des Verfahrens (1) ist ein aprotisches Lösungsmittel oder Lösungsmittelgemisch besonders bevorzugt.


Verfahren (2):

Sollen Verbindungen der Formel (I) hergestellt werden, wobei R einen Rest der Formel (IV) bedeutet, mit der Maßgabe, daß bis zu z-1 der Reste **R** in Formel (I) auch Reste der Formel -O-SiR'$_3$ sein können, so geschieht dies vorzugsweise durch Umsetzung von Silicaten der Formel (XII)

**(W$_4$ NOSiO$_{3/2}$)$_z$    (XII),**

worin
**W** gleiche oder verschiedene C$_1$- bis C$_4$-Alkylreste und
**z** 6, 8, oder 10, vorzugsweise die Zahl 8
bedeuten,
mit Verbindungen der Formeln (XIII)

**LSi(R'$_2$)-Y    (XIII)**

und/oder (XIV)

**M[Si(R'$_2$)-Y]$_2$    (XIV),**

gegebenenfalls im Gemisch mit Verbindungen der Formeln (XVI)

**LSi(R'$_3$)    (XVI)**

und/oder (XVII)

4

M[Si(R'$_3$)]$_2$     (XVII),

wobei in den obigen Formeln (XIII), (XIV), (XVI) und (XVII)
L einen einwertigen Rest, nämlich eine Hydroxylgruppe, ein Halogenatom oder eine gegebenenfalls durch bis zu zwei Alkylreste mit jeweils bis zu 12 C-Atomen substituierte Aminogruppe;
M einen zweiwertigen Rest, nämlich eine gegebenenfalls durch einen Alkylrest mit bis zu 12 C-Atomen substituierte Iminogruppe, eine Gruppe der Formel -O- oder -NH-CO-NH- bedeuten und R' und Y die in Anspruch 1 angegebene Bedeutung haben.

Vorzugsweise steht L für eine Hydroxylgruppe; vorzugsweise steht M für eine Gruppe der Formel -O-.

Die Herstellung von Silicaten der Formel (XII) ist von D. Hoebbel und W. Wieker (Zeitschrift für anorganische und allgemeine Chemie 384, Seite 43-52 (1971) ) und I. Hasegawa und S. Sakka (Journal of Molecular Liquids 34, Seite 307-315 (1987) ) beschrieben. Die Darstellung gelingt beispielsweise durch Hydrolyse von Tetraethylsilicat in wässrigem Methanol in Gegenwart von Tetraalkylammoniumhydroxiden, wobei durch geeignete Wahl des Tetraalkylammoniumhydroxids und der Gewichtsverhältnisse der Reaktanden selektiv Moleküle der Formel (XII) dargestellt werden können, für die z 6, 8 oder 10 bedeutet.

Das Verfahren (2) wird vorzugsweise in Gegenwart eines sauren Katalysators durchgeführt.

Beispiele für solche sauren Katalysatoren sind die nachstehend als Beispiele für Säuren genannten Stoffe, insbesondere Salzsäure.

Beispiele für Säuren sind Lewis-Säuren, wie BF$_3$, AlCl$_3$, TiCl$_4$, SnCl$_4$, SO$_3$, PCl$_5$, POCl$_3$, FeCl$_3$ und dessen Hydrate und ZnCl$_2$, Phosphornitridchloride; Brönstedt-Säuren, wie Salzsäure, Bromwasserstoffsäure, Schwefelsäure, Chlorsulfonsäure, Phosphorsäuren, wie ortho-, meta- und Polyphosphorsäuren, Borsäure, selenige Säure, Salpetersäure, Essigsäure, Propionsäure, Halogenessigsäuren, wie Trichlor- und Trifluoressigsäure, Oxalsäure, p-Toluolsulfonsäure, saure Ionenaustauscher, saure Zeolithe, säureaktivierte Bleicherde, säureaktivierter Ruß, Fluorwasserstoff, Chlorwasserstoff und dergleichen mehr.

Verfahren (2) wird vorzugsweise in einem Lösungsmittel, insbesondere in einem polar protischen Lösungsmittel durchgeführt.

Als Lösungsmittel sind die oben für Verfahren (1) angegebenen polar protischen Lösungsmittel bevorzugt, insbesondere die dort genannten Alkohole und Wasser.

Es ist insbesondere bevorzugt, die Silicate der Formel (XII) mit Verbindungen der Formel (XIV), gegebenenfalls im Gemisch mit Verbindungen der Formel (XVII), umzusetzen.

Ganz besonders bevorzugt als Verbindung der Formel (XVII) ist Hexamethyldisiloxan.

Das Verfahren (2) wird vorzugsweise bei Temperaturen von -10 °C bis +70 °C, insbesondere von 0 °C bis 40 °C durchgeführt. Das Verfahren kann beim Druck der umgebenden Atmosphäre, also etwa 0,1 MPa (abs.), es kann auch bei höheren oder niedrigeren Drücken durchgeführt werden. Bevorzugt sind Drücke von 0,08 bis 0,2 MPa (abs.), insbesondere von 0,09 bis 0,15 MPa (abs.).

Verfahren (3):

Sollen Verbindungen der Formel (I) hergestellt werden, wobei R einen Rest der Formel (IV) bedeutet, und z für die Zahl 8 oder 10 steht, mit der Maßgabe, daß bis zu z-1 der Reste R in Formel (I) auch Reste der Formel -O-SiR'$_3$ sein können, so geschieht dies vorzugsweise durch Umsetzung von Silicaten der Formel (XVIII)

[(R'$_3$)SiOSiO$_{3/2}$]$_w$     (XVIII),

worin R' die für die Formel (VI) angegebene Bedeutung hat und
w für die Zahl 8 oder 10 steht,
mit einer oder mehreren Verbindungen der oben im Abschnitt "Verfahren (2)" beschriebenen Formeln (XIII) und/oder (XIV).

Als Verbindungen der Formel (XVIII) sind insbesondere solche der Formel (XIX) bevorzugt:

[(CH$_3$)$_3$SiOSiO$_{3/2}$]$_w$     (XIX),

worin w die für Formel (XVIII) angegebene Bedeutung hat und vorzugsweise den Wert 8 besitzt.

Die Herstellung der Verbindungen der Formel (XIX) ist in dem im Abschnitt "Verfahren (2)" zitierten Artikel von D.Hoebbel und W. Wieker beschrieben. Sie gelingt durch Silylieren von Verbindungen der Formel (XII) mit Hexamethyldisiloxan in saurer, Isopropanal enthaltender Lösung.

Es ist bevorzugt, Verbindungen der Formel (XVIII), also insbesondere solche der Formel (XIX), mit Verbindungen der Formel (XIV) umzusetzen.

Vorzugsweise wird das Verfahren (3) in Gegenwart von saurem Katalysator durchgeführt.

Bevorzugt als saure Katalysatoren sind die im Abschnitt "Verfahren (2)" als Beispiele genannten Brönstedt- und Lewis-Säuren, insbesondere säureaktivierte Bleicherde, HCl und saure makroretikulare Harze, wie beispielsweise Amberlyst[R] 15 (erhältlich bei Janssen Chimica, D-4054 Nettetal 2).

Die Umsetzung kann ohne Lösungsmittel bzw. mit einem Reaktanden als Lösungsmittel durchgeführt werden, was bevorzugt ist. Soll (zusätzlich) Lösungsmittel verwendet werden, so sind die im Abschnitt "Verfahren (1B)" genannten Lösungsmittel(gemische) bevorzugt.

Das Verfahren (3) wird vorzugsweise bei Temperaturen von -20 °C bis +200 °C, insbesondere von 20 °C bis 100 °C durchgeführt. Das Verfahren kann beim Druck der umgebenden Atmosphäre, also etwa 0,1 MPa (abs.), es kann auch bei höheren oder niedrigeren Drücken durchgeführt werden. Bevorzugt sind Drücke von 0,08 bis 0,2 MPa (abs.), insbesondere von 0,09 bis 0,15 MPa (abs.).

Nach Beendigung der Reaktion wird der Katalysator, falls ein solcher verwendet wird, vorzugsweise entfernt. Ist der Katalysator fest und in der Reaktionsmischung nicht löslich, so wird er vorzugsweise durch Dekantieren, Filtrieren oder Zentrifugieren abgetrennt.

Anschließend oder gleichzeitig wird vorzugsweise Lösungsmittel, falls verwendet, und/oder nicht umgesetzte Ausgangssubstanzen aus dem Reaktionsgemisch entfernt, insbesondere durch Destillation.

Alle vorstehend aufgeführten Reaktionsteilnehmer und Hilfschemikalien können einzeln oder im Gemisch eingesetzt werden. Es können beispielsweise Gemische von Verbindungen der Formel (IX), von Verbindungen der Formel (X), von Verbindungen der Formel (XII), von Verbindungen der Formel (XIII), von Verbindungen der Formel (XIV) eingesetzt werden, Gemische von Katalysatoren, von Lösungsmitteln, von organischen Peroxiden bzw. Azoverbindungen eingesetzt werden.

Im nachfolgenden Beispiel sind, falls jeweils nicht anders angegeben,

a) alle Mengenangaben auf das Gewicht bezogen;

b) alle Drücke 0,10 MPa (abs.);

c) alle Temperaturen 20° C .


Beispiel 1

Vernetzung von $\alpha,\omega$-H-Polydimethylsiloxanen mit Octa(vinyldimethylsiloxy)octasilsesquioxan


Octa(vinyldimethylsiloxy)octasilsesquioxan wurde jeweils mit $\alpha,\omega$-H-Polydimethylsiloxanen unterschiedlicher mittlerer Kettenlänge (mittlere Zahl an Dimethylsiloxyeinheiten $\bar{n}$: 8, 34, 95, 200) im molaren Verhältnis 1 : 4 unter Zugabe von einer zum Lösen von Octa(vinyldimethylsiloxy)octasilsesquioxan ausreichenden Menge Toluol zu einer homogenen Lösung vermischt und mit bezogen auf 1 Mol Octa(vinyldimethylsiloxy)-octasilsesquioxan 49 ml einer Katalysatorlösung (Lösung eines Pt-Olefin-Komplexes mit einem Pt-Gehalt von 10 mg Pt pro 1 ml 1-Octen) versetzt. Die Lösung wurde auf einen Glasträger in einer Schichtdicke aufgebracht, daß nach einstündigem Erhitzen auf 100°C bei Normaldruck ein etwa 5 mm dicker Film resultierte. Der vernetzte Film wurde anschließend 15 h bei 100°C unter Vakuum (100 Pa) zur Entfernung von Restlösungsmittel nachbehandelt.

Je nach verwendetem $\alpha,\omega$-H-Polydimethylsiloxan besaßen die vernetzten Filme spröde bis elastomere Eigenschaften. Zur Charakterisierung des Vernetzungsgrades wurden die vernetzten Filme bei 25°C 12 Tage lang in Toluol gequollen.

Die einzelnen Daten sind in nachfolgender Tabelle zusammengefaßt.

Zur Charakterisierung des Vernetzungsgrades wurde der reziproke Gleichgewichtsquellwert 1/Q herangezogen gemäß DIN 53 521, der folgendermaßen definiert ist:

$$ 1/Q = \frac{a}{b-a} $$

a: Gewicht des gequollenen Probekörpers nach vollständiger Trocknung

b: Gewicht des gequollenen Probekörpers

Tabelle:

| $= \left[ Si(CH_3)_2 O \right]_n Si(CH_3)_2$ | Eigenschaften der Produkte | reziproker Gleichgewichts-quellwert 1/Q gemäß DIN 53 521 | löslicher Anteil Anteil in Gew.% |
|---|---|---|---|
| 8 | transparent, sehr spröde, harzähnlich | 1,200 | 2,3 |
| 34 | transparenter, noch spröder, teilweise zusammenhängender Film | 0,563 | 3,5 |
| 95 | transparenter zusammenhängen-der Film gewisser Elastizität | 0,263 | - |
| 200 | transparenter elastomerer Film | 0,223 | 6,4 |

7

**Patentansprüche**

1. Verbindungen der Formel

   $[RSiO_{3/2}]_z$    (I),

   worin
   **z** die Zahl 6, 8 oder 10 ;
   **R** gleiche oder verschiedene Reste der Formel

   $-O-Si(R'_2)-Y$    (IV)

   sind, mit der Maßgabe, daß bis zu z-1 der Reste **R** auch Reste der Formel $-O-SiR'_3$ sein können, wobei
   **Y** einen Rest der Formeln

   $-CH_2CH_2-X$    (II)

   oder

   $-CH(CH_3)-X$    (III),

   **X** jeweils einen einwertigen bzw. einen halben zweiwertigen Rest der Formeln

   $[-(R'_2SiO)_n-]_{1/2}$    (VI),

   $-S-R''$    (VII)

   oder

   $[-S-R'''-S-]_{1/2}$    (XV);

   **R'** gleiche oder verschiedene $C_1$- bis $C_6$-Alkyl-, $C_1$- bis $C_6$-Alkoxy- oder Phenylreste;
   **R''** gleiche oder verschiedene $C_1$- bis $C_{18}$-Alkylreste, welche durch Reste der Formel (VI) substituiert sind;
   **R'''** gleiche oder verschiedene zweibindige $C_1$- bis $C_{18}$-Kohlenwasserstoffreste, vorzugsweise Alkylen- und/oder Phenylenreste und/oder Reste der Formel $-(R'_2SiO)_n-$ und
   **n** eine ganze Zahl im Wert von mindestens 1 bedeuten.

2. Verbindungen gemäß Anspruch 1, worin
   **R'** gleiche oder verschiedene Methyl- oder Methoxy- oder Ethoxygruppen und
   **R''** gleiche oder verschiedene $C_1$- bis $C_{14}$-Alkylreste, welche durch jeweils einen Rest der Formel (VI) substituiert sind, bedeuten.

3. Verfahren zur Herstellung von Verbindungen gemäß Anspruch 1 oder 2, durch Umsetzung von Verbindungen der Formel

   $[E-(R'_2SiO)_ySiO_{3/2}]_x[RSiO_{3/2}]_{(8-x)}$    (IX),

   **worin**
   **x** eine ganze Zahl im Wert von 1 bis 8 ist und
   **y** den Wert 1 hat,
   mit Verbindungen der Formel

   **GX**    (X),

   wobei die Reste E in Formel (IX) von den Resten G in Formel (X) verschieden sind und die Reste E und G entweder Vinylgruppen oder direkt an Siliciumatome bzw. Schwefelatome gebundene Wasserstoffatome bedeuten.

4. Verfahren nach Anspruch 3 zur Herstellung von Verbindungen der Formel (I), wobei
X jeweils einen Rest der Formel (VII) oder (XV)
bedeutet,
und die Umsetzung in Gegenwart von freien Radikalen, insbesondere in Anwesenheit von organischen Peroxiden, Azoverbindungen und/oder unter Bestrahlung mit hochenergetischer elektromagnetischer Strahlung wie UV-Licht, durchgeführt wird.

5. Verfahren zur Herstellung von Verbindungen der Formel (I), wobei R einen Rest der Formel (IV) bedeutet, mit der Maßgabe, daß bis zu z-1 der Reste **R** in Formel (I) auch Reste der Formel $-O-SiR'_3$ sein können, durch Umsetzung von Silicaten der Formel (XII)

$$(W_4 NOSiO_{3/2})_z \quad (XII),$$

worin
**W** gleiche oder verschiedene $C_1$- bis $C_4$-Alkylreste und
**z** 6, 8, oder 10, vorzugsweise die Zahl 8
bedeuten,
mit Verbindungen der Formeln (XIII)

$$LSi(R'_2)-Y \quad (XIII)$$

und/oder (XIV)

$$M[Si(R'_2)-Y]_2 \quad (XIV),$$

gegebenenfalls im Gemisch mit Verbindungen der Formeln (XVI)

$$LSi(R'_3) \quad (XVI)$$

und/oder (XVII)

$$M[Si(R'_3)]_2 \quad (XVII),$$

**wobei in** den obigen Formeln (XIII), (XIV), (XVI) und (XVII)
**L** einen einwertigen Rest, nämlich eine Hydroxylgruppe, ein Halogenatom oder eine gegebenenfalls durch bis zu zwei Alkylreste mit jeweils bis zu 12 C-Atomen substituierte Aminogruppe;
**M** einen zweiwertigen Rest, nämlich eine gegebenenfalls durch einen Alkylrest mit bis zu 12 C-Atomen substituierte Iminogruppe, eine Gruppe der Formel -O- oder -NH-CO-NH-
bedeuten und R' und Y die in Anspruch 1 angegebene Bedeutung haben.

6. Verfahren zur Herstellung von Verbindungen der Formel (I), wobei R einen Rest der Formel (IV) bedeutet, und z für die Zahl 8 oder 10 steht, mit der Maßgabe, daß bis zu z-1 der Reste **R** in Formel (I) auch Reste der Formel $-O-SiR'_3$ sein können, durch Umsetzung von Silicaten der Formel (XVIII)

$$[(R'_3)SiOSiO_{3/2}]_w \quad (XVIII),$$

worin R' die in Anspruch 1 angegebene Bedeutung hat und
**w** für die Zahl 8 oder 10 steht,
mit einer oder mehreren Verbindungen der in Anspruch 5 beschriebenen Formeln (XIII) und/oder (XIV).

**Claims**

1. Compound of the formula

$$[RSiO_{3/2}]_z \quad (I)$$

in which $z$ is the number 6, 8 or 10; and
**R** are identical or different radicals of the formula

**-O-Si(R'$_2$)-Y      (IV)**

with the proviso that up to $z$-1 of the radicals **R** can also be radicals of the formula -O-SiR'$_3$, in which Y denotes a radical of the formulae

-CH$_2$CH$_2$-X      (II)

or

-CH(CH$_3$)-X      (III),

**X** in each case denotes a monovalent or one half of a divalent radical of the formulae

**[-(R'$_2$SiO)$_n$-]$_{1/2}$      (VI),**

**-S-R''      (VII)**

**or**

**[-S-R'''-S-]$_{1/2}$      (XV)**

**R'** denote identical or different $C_1$- to $C_6$-alkyl, $C_1$- to $C_6$-alkoxy or phenyl radicals;
**R''** denote identical or different $C_1$- to $C_{18}$-alkyl radicals, which are substituted by radicals of the formula (VI);
**R'''** denote identical or different divalent $C_1$- to $C_{18}$-hydrocarbon radicals, preferably alkylene and/or phenylene radicals and/or radicals of the formula
-(R'$_2$SiO)$_n$- and
**n** denotes an integer with a value of at least 1.

2.  Compound according to Claim 1, in which
    **R'** denote identical or different methyl or methoxy or ethoxy groups and
    **R''** denote identical or different $C_1$- to $C_{14}$-alkyl radicals which are substituted by in each case one radical of the formula (VI).

3.  Process for the preparation of a compound according to Claim 1 or 2, by reacting a compound of the formula

    **[E-(R'$_2$SiO)$_y$SiO$_{3/2}$]$_x$[RSiO$_{3/2}$]$_{(8-x)}$      (IX)**

    in which
    **x** is an integer with a value from 1 to 8 and
    **y** has the value 1, with a compound of the formula

    **GX      (X)**

    in which the radicals **E** in formula (IX) differ from the radicals G in formula (X) and the radicals E and G denote either vinyl groups or hydrogen atoms which are bonded directly to silicon atoms or sulphur atoms.

4.  Process according to Claim 3 for the preparation of a compound of the formula (I), in which
    **X** in each case denotes a radical of the formula (VII) or (XV) and the reaction is carried out in the presence of free radicals, in particular in the presence of an organic peroxide or an azo compound and/or under irradiation with high-energy electromagnetic radiation, such as UV light.

10

5. Process for the preparation of a compound of the formula (I) in which **R** denotes a radical of the formula (IV), with the proviso that up to z-1 of the radicals **R** in formula (I) can also be radicals of the formula -O-SiR'$_3$, by reacting a silicate of the formula (XII)

$$(W_4 NOSiO_{3/2})_z \qquad (XII)$$

in which
**W** denote identical or different $C_1$- to $C_4$-alkyl radicals and
**z** denotes 6, 8 or 10, preferably the number 8, with a compound of the formulae (XIII)

$$LSi(R'_2)-Y \qquad (XIII)$$

and/or (XIV)

$$M[Si(R'_2)-Y]_2 \qquad (XIV)$$

if appropriate mixed with a compound of the formulae (XVI)

$$LSi(R'_3) \qquad (XVI)$$

and/or (XVII)

$$M[Si(R'_3)]_2 \qquad (XVII)$$

in which, in the above formulae (XIII), (XIV), (XVI) and (XVII),
**L** denotes a monovalent radical, that is to say a hydroxyl group, a halogen atom or an amino group which is optionally substituted by up to two alkyl radicals having in each case up to 12 C atoms;
**M** denotes a divalent radical, that is to say an imino group which is optionally substituted by an alkyl radical having up to 12 C atoms, or a group of the formula -O- or -NH-CO-NH-, and R' and Y have the meaning given in Claim 1.

6. Process for the preparation of a compound of the formula (I) in which **R** denotes a radical of the formula (IV) and z represents the number 8 or 10, with the proviso that up to z-1 of the radicals **R** in formula (I) can also be radicals of the formula -O-SiR'$_3$, by reacting a silicate of the formula (XVIII)

$$[(R'_3)SiOSiO_{3/2}]_w \qquad (XVIII)$$

in which R' has the meaning given in Claim 1 and
**w** represents the number 8 or 10, with one or more compounds of the formulae (XIII) and/or (XIV) described in Claim 5.

## Revendications

1. Composés de formule :

$$[RSiO_{3/2}]_z \qquad (I)$$

dans laquelle z vaut 6, 8 ou 10 ;
les radicaux R sont identiques ou différents de formule

$$-O-Si(R'_2)-Y \qquad (IV)$$

dans la mesure où jusqu'à un nombre z-1 des radicaux R peuvent peuvent être aussi des radicaux de formule -O-SiR'$_3$, Y étant un radical de formules :

$$-CH_2CH_2-X \qquad (II)$$

ou

-CH(CH$_3$)-X (III)

X représente chaque fois un radical monovalent, respectivement un demi-radical bivalent de formules :

[-(R'$_2$SiO)$_n$-]$_{1/2}$ (VI)

-S-R'' (VII)

ou

[-S-R'''-S-]$_{1/2}$ (XV)

R' représente des radicaux identiques ou différents alkyle en C$_1$ à C$_6$, alcoxy en C$_1$ à C$_6$ ou phényle ;
R'' représente des radicaux identiques ou différents alkyle en C$_1$ à C$_{18}$ qui sont substitués par des radicaux de formule (VI) ;
R''' représente des radicaux hydrocarbonés bivalents en C$_1$ à C$_{18}$, de préférence des radicaux alkylène et/ou phénylène et/ou des radicaux de formule -(R'$_2$SiO)$_n$- et
n est un nombre entier ayant une valeur d'au moins 1.

2. Composés selon la revendication 1, dans lesquels R' représente des groupes identiques ou différents méthyle ou méthoxy ou éthoxy, et
R'' représente des radicaux alkyle en C$_1$ à C$_{14}$ identiques ou différents qui sont substitués chaque fois par un radical de formule (VI).

3. Procédé pour la préparation de composés selon les revendications 1 ou 2, par réaction des composés

[E-(R'$_2$SiO)$_y$SiO$_{3/2}$]$_x$[RSiO$_{3/2}$]$_{(8-x)}$ (IX),

dans laquelle
x représente un nombre entier d'une valeur de 1 à 8, et
y a la valeur 1,
avec des composés de formule :

GX (X),

où les radicaux E dans la formule (IX) sont différents des radicaux G dans la formule (X) et les radicaux E et G représentent soit des groupes vinyle ou des atomes d'hydrogène liés directement aux atomes de silicium, respectivement aux atomes de soufre.

4. Procédé selon la revendication 3, pour la préparation de composés de formule (I) où
X représente chaque fois un radical de formule (VII) ou (XV),
et la réaction est mise en oeuvre en présence de radicaux libres, notamment en présence de peroxydes organiques, de composés azoïques et/ou sous irradiation par un rayonnement électromagnétique à haute énergie comme la lumière UV.

5. Procédé pour la préparation de composés de formule (I), où le radical R signifie un radical de formule (IV), dans la mesure où jusqu'à une valeur z-1 des radicaux R dans la formule (I), peuvent être aussi des radicaux de formule -O-SiR'$_3$, on procède de préférence par réaction de silicates de formule (XII) :

(W$_4$NOSiO$_{3/2}$)$_z$ (XII)

où

W représente des radicaux alkyle identiques ou différents en C$_1$-C$_4$, et
z vaut 6, 8 ou 10, de préférence 8, avec des composés de formules (XIII)

LSi(R'$_2$)-Y (XIII)

12

et/ou (XIV)

M[Si(R'$_2$)-Y]$_2$     (XIV)

éventuellement en mélange avec des composés de formules (XVI)

LSi(R'$_3$)     (XVI)

et/ou (XVII)

M[Si(R'$_3$)]$_2$     (XVII)

dans les formules ci-dessus (XIII), (XIV), (XVI) et (XVII), L ayant la signification d'un radical monovalent, notamment d'un groupe hydroxyle, d'un atome d'halogène ou d'un groupe amino éventuellement substitué par jusqu'à 2 radicaux alkyle avec chacun jusqu'à 12 atomes de carbone ;
M ayant la signification d'un radical bivalent, notamment d'un groupe imino éventuellement substitué par un radical alkyle avec jusqu'à 12 atomes de carbone, un groupe de formule -O- ou -NH-CO-NH-, et R' et Y ayant la signification donnée dans la revendication 1.

6. Procédé pour la préparation de composés de formule (I), R signifiant un radical de formule (IV) et z ayant la valeur de 8 ou 10, à la condition que jusqu'à une valeur z-1 du radical R dans la formule (I) peuvent aussi représenter des radicaux de formule -O-SiR'$_3$ par réaction de silicates de formule (XVIII) :

[(R'$_3$)SiOSiO$_{3/2}$]$_w$     (XVIII),

où R' a la signification donnée dans la revendication 1, et
w vaut 8 ou 10,
avec un ou plusieurs composés des formules (XIII) et/ou (XIV) décrites dans la revendication 5.